# EUROPEAN PATENT APPLICATION

(11) **EP 4 124 768 A1**
(43) Date of publication of application: **01.02.2023**
(21) Application number: 21187659.4
(22) Date of filing: 26.07.2021
(51) Int. Cl.: F16B 37/08, E04B 1/41

(54) **THREADED ROD CONNECTOR WITH THREADLESS CONTACT SURFACES**

(71) Applicant: Hilti Aktiengesellschaft, 9494 Schaan (LI)
(72) Inventor: Ziltener, Michael, 8854 Siebnen (CH); Gutensohn, Markus, 6845 Hohenems (AT)
(74) Representative: Hilti Aktiengesellschaft Corporate Intellectual Property

(57) **Abstract**

Threaded rod connector comprising a housing having a cavity for receiving a threaded rod therein, wherein the housing has a mouth for inserting the threaded rod into the cavity, and a plurality of rod engagement wedge segments, which are arranged within the cavity, wherein each of the rod engagement wedge segments has a rod contact surface for engaging the threaded rod, wherein the housing has a tapered surface, which delimits the cavity, and which tapers towards the mouth for wedging the rod engagement wedge segments against the threaded rod, characterized in that at least one of the rod contact surfaces is threadless and has a surface roughness Ra of 7.0 µm or greater. [fig.4]

## Description

The invention relates to a threaded rod connector according to the preamble of claim 1.

A threaded rod connector of this type comprises:
- a housing having a cavity for receiving a threaded rod therein, wherein the housing has a mouth for inserting the threaded rod into the cavity, and
- a plurality of rod engagement wedge segments, which are arranged within the cavity, wherein each of the rod engagement wedge segments has a rod contact surface for engaging the threaded rod,
- wherein the housing has a tapered surface, which delimits the cavity, and which tapers towards the mouth for wedging the rod engagement wedge segments against the threaded rod,

US5468105 A, US9181691 B2 and US2010108840 A1 disclose cast in place anchors provided with quick acting threaded rod connectors having internally threaded rod engagement wedge segments arranged in a tapered cavity, wherein the taper of the cavity is intended to wedge the rod engagement wedge segments against a threaded rod that is disposed within the respective anchor. The rod engagement wedge segments of US9181691 B2 are provided with two thread structures of different diameter each, so as to engage threaded rods of two different sizes.

GB624714 A, WO2021032527 A1, WO2021032517 A1 and WO2021032536 A1 disclose further cast in place anchors provided with quick acting threaded rod connectors. These devices comprise cage elements having threaded finger structures for catching a threaded rod.

Further cast in place anchors provided with quick acting threaded rod connectors are described in US2018298938 A1, US2020325924 A1 and US2020325673 A1.

Further cast in place anchors are described in WO2019008307 A1, US2019352900 A1, US2020224696 A1, US2018283606 A1, US2018066426 A1, KR20180013235 A,

US2017298617 A1, JP2017032023 A2, US2017241129 A1, US20210123238A1, WO2020/016096A1 and US20200248444A1.

US10640978 B2 and US10655358 B2 disclose cable connectors provided with wedge mechanisms.

It is an object of the invention to provide a threaded rod connector which is particular versatile, reliable, powerful and/or easy to manufacture.

This object is achieved by a threaded rod connector according to claim 1. Dependent claims refer to preferred embodiments of the invention.

According to the invention, at least one of the rod contact surfaces is threadless and has a surface roughness Ra of 7.0 µm or greater, wherein Ra is the arithmetic average of the roughness profile and/or defined in EN ISO 4287.

It was found that when the rod engagement wedge segments are provided with a significant surface roughness at their rod contact surfaces, they are able to securely engage threaded rods with standard threads without the need to provide mating threads on the rod contact surfaces, i.e. the contact surfaces can be threadless. Threadless engagement of the threaded rod by the rod engagement wedge segments can have, in term, significant advantages. Since the engagement of the threaded rod by the rod engagement wedge segments is primarily frictional and not geometrical, requirements regarding the precision of alignment of the rod engagement wedge segments can be reduced, which can in term reduce manufacturing effort. Moreover, one and the same threaded rod connector is able to securely engage different threaded rod types and diameters. For example, one and the same threaded rod connector might be able to engage both metric sized and imperial sized threaded rods, of different diameter imperial sized or metric sized rods. Accordingly, versatility can be significantly improved.

The rod engagement wedge segments can be separate parts. They can also be rigidly connected, as for example shown in GB624714 A, or integral, as for example shown in WO2021032527 A1, WO2021032517 A1 or WO2021032536 A1, all of which are hereby incorporated by reference.

Preferentially, each of the rod contact surfaces is threadless and has a surface roughness Ra of 7.0 µm or greater. Accordingly, each one of the rod contact surfaces is configured as described above. This can be advantageous in view of ease of manufacturing and/or versatility.

Advantageously, the threaded rod connector may further comprise a cage, which is arranged within the cavity, wherein the cage encloses the rod engagement wedge segments so as to align the rod engagement wedge segments with respect to one another. Accordingly, a cage is provided, which has recesses that accommodate the wedge segments, and which forces the rod engagement wedge segments into the correct relative positions, in particular in the circumferential and/or axial directions. A cage can facilitate the use of relatively narrow (in the circumferential direction) rod engagement wedge segments. Narrow rod engagement wedge segments, in term, can increase pressure between the rod engagement wedge segments and the threaded rod engaged therewith. Moreover, having the rod engagement wedge segments narrow can further increase versatility, since narrow rod engagement wedge segments permit insertion of a wide range of threaded rod diameters without geometrically obstructing the threaded rods. The cage can preferably consist of a plastic material. This can be advantageous in view of manufacturing effort. In particular, the cage surrounds the longitudinal axis of the cavity.

It can be provided that in at least in one cross-sectional plane, at least one of the rod engagement wedge segments tapers towards the centre of the cavity. The cage may be provided with correspondingly tapering retention walls that retain the at least one of the rod engagement wedge segments within the cage. Accordingly, there is a positive fit between said rod engagement wedge segment and the cage, which secures the rod engagement wedge segment against falling out of the cage towards the centre of the cavity, the positive fit being provided by corresponding tapering surfaces. This can provide particularly reliable operation at particular low manufacturing effort.

Preferably, a plurality of the rod engagement wedge segments or all of the rod engagement wedge segments are configured as described here.

The tapered surface is preferentially conical and/or has an opening angle α of 12° or more, which can provide particular reliable wedging performance. The tapered surface is preferably generally smooth. In particular, it can have a surface roughness Ra of 0.5 µm or less.

The threaded rod connector is preferably a cast in place anchor, i.e. an anchor intended to be cast into concrete. Preferably, the threaded rod connector comprises an anchor flange, which projects from the housing. This can provide particularly robust anchorage with particularly low effort.

The invention also relates to a system comprising a threaded rod connector as described here and a threaded rod that is arranged within the cavity of the housing of the threaded rod connector. Accordingly, the threaded rod connector is used to engage a threaded rod as intended.

The invention is explained in greater detail below with reference to preferred exemplary embodiments, which are depicted schematically in the accompanying drawings. Individual features of the exemplary embodiments presented below can be implemented either individually or in any combination within the scope of the present invention.
Figure 1 is a sectional view a first embodiment of a threaded rod connector.
Figure 2 is a sectional view, similar to that of figure 1, of the threaded rod connector of figure 1, but with a threaded rod inserted.
Figure 3 is a cross-section, A-A according to figure 1, of the threaded rod connector of figure 1.
Figure 4 is an exploded view of the threaded rod connector of figure 1.
Figure 5 is a perspective view showing a semi manufactured product used for manufacturing the rod engagement wedge segments 50.

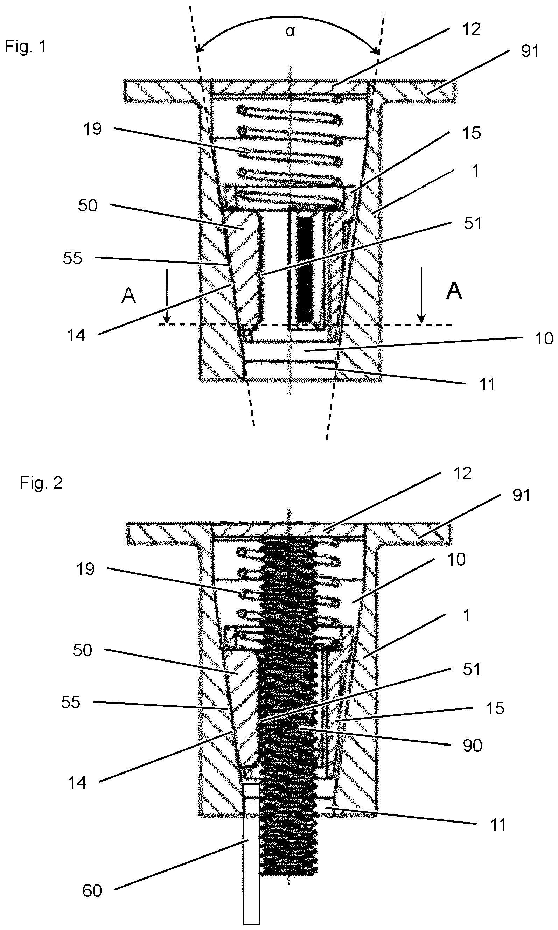

The threaded rod connector shown in figures 1 to 4 comprises a housing 1, in particular a metal housing 1. In the present embodiment, the housing 1 has a generally circular cylindrical outline, but this is an example only, and other outline shapes could be used, such as conical shapes. The housing 1 has a cavity 10 for receiving a threaded rod therein. On its first face, the housing 1 has a mouth 11 for inserting a threaded rod 90 into the cavity 10. At the mouth 11, the cavity 10 is accessible from outside of the housing 1.

At its second, rear face, which is located opposite the first face, the housing 1 is closed by means of a plug 12. The cavity 10 is thus a blind hole. By way of example the plug 12 and the remainder of the housing 1 are separate parts, but this is an example only, and the plug 12 and the remainder of the housing 1 could also be integral.

By way of example, the threaded rod connector is a cast in place anchor. As such, it comprises an anchor flange 91, which radially projects from the housing 1, in particular near its second face. The anchor flange 91 and the housing 1 can be integral or separate parts.

The housing 1 has a tapered surface 14, which surrounds the cavity 10. The tapered surface 14 tapers towards the mouth 11 of the housing 1. In the present embodiment, the tapered surface 14 is by way of example conical, with an opening angle α of 12° or more (about 16° in the present embodiment), but other tapered forms could also be envisaged.

The threaded rod connector further comprises a plurality (namely three in the present embodiment by way of example) of rod engagement wedge segments 50, which are arranged within the cavity. The rod engagement wedge segments 50 each have a rod contact surface 51 for engaging the threaded rod, wherein the rod contact surfaces 51 each face the centre of the cavity 10. Moreover, the rod engagement wedge segments 50 each have a sliding surface 55, which faces away from the centre of the cavity 10 and which therefore faces the tapered surface 14. The rod contact surface 51 and the sliding surface 55 are opposite surfaces of the respective rod engagement wedge segments 50.

The threaded rod connector further comprises a cage 15, which is arranged within the cavity 10. The cage 15 has a tubular structure, which surrounds the centre of the cavity 10, and which allows threaded rods to be inserted into the cage 15. By way of example, the cage 15 is made of plastic material. The cage 15 has openings 56 (three in the present embodiment, by way of example), in which the rod engagement wedge segments 50 are arranged, i.e. the rod engagement wedge segments 50 are embedded in the cage 15, so that the cage 15 maintains the rod engagement wedge segments 50, circumferentially and preferably also axially, in their intended positions relative to one another. The openings 56 are through holes so has to enable the rod engagement wedge segments 50 to contact both the threaded rod 90 and the tapered surface 14.

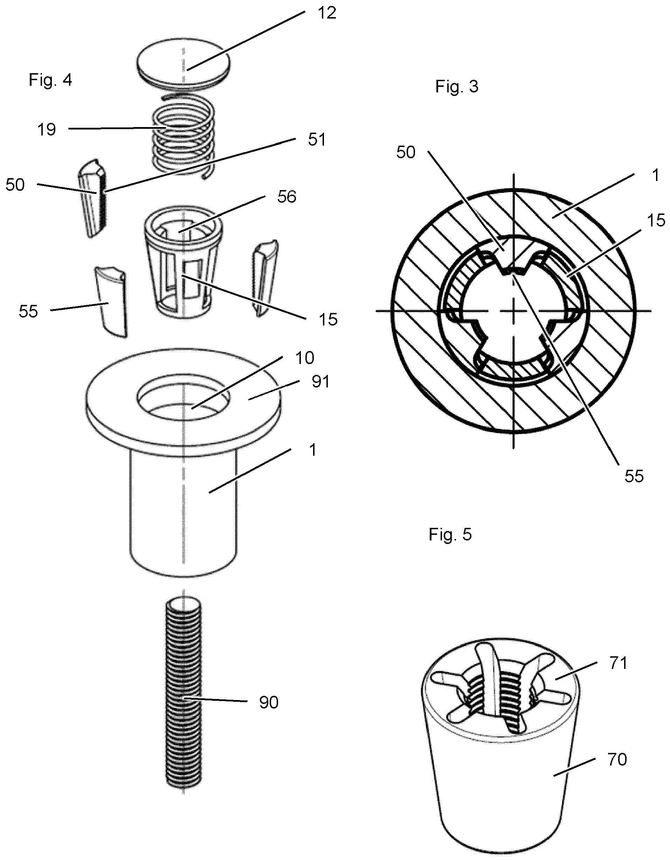

When seen in cross section (see figure 3), each of the rod engagement wedge segments 50 tapers towards the centre of the cavity 10. The cage can be provided with correspondingly tapering retention walls, which retain the respective adjacent rod engagement wedge segments 50 within the cage 15 and prevent the rod engagement wedge segments 50 from falling into the centre of the cavity 10.

The threaded rod connector further comprises a spring 19, which pushes the rod engagement wedge segments 50 against the tapered surface 14 and biases them towards the mouth 11. On its first side, the spring 19 bears directly against the cage 15 and thus indirectly against the rod engagement wedge segments 50 held by the cage 15. On its second side, the spring 19 bears directly against the housing 1, preferably against the plug 12 thereof. Bearing of the spring 19 against the rod engagement wedge segments 50 on the first side of the spring is indirect.

When seen in cross section, the convexly curved sliding surfaces 55 of the rod engagement wedge segments 50 each have a curvature that is generally the same as the curvature of the tapered surface 14. This can provide a self-centring effect.

The rod contact surfaces 51 for engaging the threaded rod 90 are unthreaded each, i.e. they do not have a systematic mating thread structure. The rod contact surfaces 51 have a surface roughness Ra (according to EN ISO 4287) of 7.0 µm or more. In the present embodiment, the surface roughness is generated, amongst others, by a groove structure consisting of a plurality of parallel grooves. However, the rod contact surfaces 51 are threadless. Accordingly, said grooves do not form a helical structure.

When the threaded rod connector is used as intended, a threaded rod 90 is inserted via the mouth 11 into the cavity 10 of the housing 1. During this operation, the rod engagement wedge segments 50 are pushed upwardly away from the mouth 11, towards the second end of the cavity 10, thereby biasing the spring 19, and the rod engagement wedge segments 50 enter a wide region of the tapered surface 14 that allows the rod engagement wedge segments 50 to be radially displaced such that the threaded rod 90 can pass.

The threaded rod 90 is subsequently released, and the spring 19 thus pushes the rod engagement wedge segments 50 axially towards the mouth 11. This in term causes the tapered surface 14 to wedge the rod engagement wedge segments 50 against the threaded rod 90, thereby engaging the threaded rod 90. The resulting configuration is shown in figure 2. If the threaded rod 90 is subsequently loaded in the pull-out direction out of the cavity 10, wedging action between the tapered surface 14 and the rod engagement wedge segments 50 will wedge-lock the threaded rod 90.

Since the rod engagement wedge segments 50 are lacking a dedicated mating threaded structure, and since they have a defined roughness, they are able to safely engage different diameter threaded rods 90. Accordingly, different thread diameter threaded rods 90 can be used in the process described above.

If it is desired to quickly release the threaded rod 90 from threaded rod connector, a rigid release tool 60 can be used, which is inserted into the cavity so as to push the cage 15 and the rod engagement wedge segments 50 arranged within the cage 15 against the force of the spring 19 away from the mouth 11, towards the plug 12 and towards the rear end of the housing 1. This will release wedging action of the rod engagement wedge segments 50 and allow the threaded rod to be pulled out of the cavity 10. Since the rod engagement wedge segments 50 are interconnected via the cage 15, it is sufficient if the release tool acts against one of the rod engagement wedge segments 50 or against the cage 15 to release the wedge mechanism. In particular, the release tool 60 is inserted via the mouth 11 or via a dedicated releases tool opening located adjacent to the mouth 11 (not shown) into the cavity 10.

The rod engagement wedge segments 50 could be manufactured by providing a sleeve 70, as shown in figure 5, that consists of a plurality of interconnected segment precursors 71, and by subsequently separating the segment precursors 71, e.g. my means of a press, to give the rod engagement wedge segments 50.

## Claims

1. Threaded rod connector comprising,
- a housing (1) having a cavity (10) for receiving a threaded rod (90) therein, wherein the housing (1) has a mouth (11) for inserting the threaded rod (90) into the cavity (10), and
- a plurality of rod engagement wedge segments (50), which are arranged within the cavity (10), wherein each of the rod engagement wedge segments (50) has a rod contact surface (51) for engaging the threaded rod (90),
- wherein the housing (1) has a tapered surface (14), which delimits the cavity (10), and which tapers towards the mouth (11) for wedging the rod engagement wedge segments (50) against the threaded rod (90),
**characterized in that**
- at least one of the rod contact surfaces (51) is threadless and has a surface roughness Ra of 7.0 µm or greater.

2. Threaded rod connector according to claim 1,
**characterized in that**
each of the rod contact surfaces (51) is threadless and has a surface roughness Ra of 7.0 µm or greater.

3. Threaded rod connector according to any of the preceding claims,
further comprising a cage (15), which is arranged within the cavity (10), wherein the cage (15) encloses the rod engagement wedge segments (50) so as to align the rod engagement wedge segments (50) with respect to one another.

4. Threaded rod connector according to any of the preceding claims, **characterized in that**
in at least in one cross-sectional plane (A-A), at least one of the rod engagement wedge segments (50) tapers towards the centre of the cavity (10).

5. Threaded rod connector according to any of the preceding claims, **characterized in that**
the tapered surface (14) is conical and has an opening angle (α) of 12° or more.

6. Threaded rod connector according to any of the preceding claims,
further comprising an anchor flange (91), which projects from the housing (1).

7. System comprising a threaded rod connector according to any of the preceding claims and a threaded rod (90) that is arranged within the cavity (10) of the housing (1) of the threaded rod connector.
